# EUROPÄISCHE PATENTANMELDUNG

(11) **EP 3 932 272 A1**
(43) Veröffentlichungstag der Anmeldung: **05.01.2022**
(21) Anmeldenummer: 21178411.1
(22) Anmeldetag: 09.06.2021
(51) Int. Cl.: A47J 43/046, H05B 6/12

(54) **KOCHSYSTEM UND VERFAHREN ZUM BETREIBEN**

(30) Priorität: 02.07.2020 DE 102020117482
(71) Anmelder: Miele & Cie. KG, 33332 Gütersloh (DE)
(72) Erfinder: Wilkens, Henrik, 49080 Osnabrück (DE); Bergmeier, Kai, 32278 Kirchlengern (DE); Bergmeier, Tino, 32257 Bünde (DE); Ennen, Volker, 32257 Bünde (DE); Hormann, Michael, 33332 Gütersloh (DE); Schöning, Frank, 33378 Rheda-Wiedenbrück (DE); Stahl, Hermann, 32289 Rödinghausen (DE); Thomas, Sebastian, 85293 Reichertshausen (DE)

(57) **Zusammenfassung**

Kochsystem (1) umfassend eine Kochfeldeinrichtung (2), eine Steuereinrichtung (3), eine Antriebseinrichtung (4) und ein Kochgeschirr (5), wobei die Kochfeldeinrichtung (2) eine Aufstelleinrichtung (6) zum Aufstellen von Kochgeschirr (5) und eine Heizeinrichtung (7) mit wenigstens einer Spule (8) umfasst. Dabei umfasst das Kochgeschirr (5) eine Gehäuseeinrichtung (9) und eine Bearbeitungseinrichtung (10) zum Bearbeiten von einem Lebensmittel, wobei die Bearbeitungseinrichtung (10) eine Magneteinrichtung (11) aufweist und wobei die Gehäuseeinrichtung (9) einen Boden (12) und eine Wandung (13) aufweist, durch welche ein Aufnahmevolumen (14) begrenzt wird, wobei in einem zusammengebauten Zustand die Bearbeitungseinrichtung (10) in dem Aufnahmevolumen (14) aufgenommen ist. Dabei umfasst die Antriebseinrichtung (4) eine Antriebsspule (15) und die Bearbeitungseinrichtung (10) ist mittels eines elektromagnetischen Feldes der Antriebsspule (15) bewegbar. Bei dem Verfahren zum Betreiben eines solchen Kochsystems (1) wird die Bearbeitungseinrichtung (10) mittels eines elektromagnetischen Feldes der Spule (15) bewegt.

## Beschreibung

Die vorliegende Erfindung betrifft ein Kochsystem umfassend wenigstens eine Kochfeldeinrichtung, wenigstens eine Steuereinrichtung, wenigstens eine Antriebseinrichtung und wenigstens ein Kochgeschirr. Dabei umfasst die Kochfeldeinrichtung wenigstens eine Aufstelleinrichtung zum Aufstellen von Kochgeschirr und wenigstens eine Heizeinrichtung mit wenigstens einer Heizspule. Das Kochgeschirr umfasst wenigstens eine Gehäuseeinrichtung und wenigstens eine Bearbeitungseinrichtung zum Bearbeiten von wenigstens einem Lebensmittel, wobei die Bearbeitungseinrichtung wenigstens eine Magneteinrichtung aufweist, und wobei die Gehäuseeinrichtung wenigstens einen Boden und wenigstens eine Wandung aufweist, durch welche wenigstens ein Aufnahmevolumen begrenzt wird, wobei in einem zusammengebauten Zustand wenigstens die Bearbeitungseinrichtung in dem Aufnahmevolumen aufgenommen ist. Des Weiteren betrifft die vorliegende Erfindung ein Verfahren zum Betreiben eines solchen Kochsystems.

Im Stand der Technik sind verschiedenste Kochsysteme bekannt geworden, welche einen Benutzer bei der Zubereitung von Nahrungsmitteln und/oder Speisen unterstützen. So gibt es beispielsweise Systeme, bei denen sensorische Komponenten eingesetzt werden, um eine Temperatur in einem Topf und/oder in einer Pfanne zu ermitteln und so einen Kochvorgang zu überwachen und/oder einem Benutzer beim Erreichen eines gewünschten und insbesondere optimalen Garergebnisses behilflich zu sein und/oder dieses sogar erst zu ermöglichen.

Besonders vorteilhaft wäre es, wenn ein Kochsystem einen Benutzer auch bei weiteren Arbeitsschritten während eines Koch- und/oder Nahrungsmittelzubereitungsvorganges wie z. B. einer Zerkleinerung, einer Homogenisierung und/oder einer Durchmischung von Nahrungs- bzw. Lebensmitteln unterstützt und/oder vorzugsweise diesen sogar weitgehend automatisch ausführt, sodass die Durchführung eines Koch- und/oder Nahrungsmittelzubereitungsvorganges für einen Benutzer besonders komfortabel ist.

Hierzu sind im Stand der Technik Kochsysteme mit einer Kochfeldvorrichtung bekannt geworden, bei welchen unterhalb eines Kochfeldes eine Heizeinrichtung zum Beheizen eines aufgestellten Kochgeschirrs angeordnet ist und ein vom Kochgeschirr umfasster Verbraucher mittels einer separaten Antriebseinheit angetrieben wird. So ist zum Beispiel in dem Dokument EP 3297506 B1 eine Kochfeldeinrichtung offenbart, bei welcher unterhalb einer Kochfeldplatte wenigstens eine Heizeinrichtung und wenigstens eine Antriebseinheit mit wenigstens einem rotierenden Element angeordnet sind und wobei die Antriebseinheit dazu vorgesehen ist, einen Verbraucher zur Bearbeitung eines Nahrungsmittels oberhalb der Kochfeldplatte anzutreiben.

Jedoch können solche bekannten Kochsysteme es oft nur einen Benutzer bei speziellen und/oder einzelnen spezifischen Arbeitsschritten während eines Koch- und/oder Nahrungsmittelzubereitungsvorganges zu unterstützen und/oder diese weitgehend automatisch durchzuführen und/oder die bekannten Kochsysteme sind in ihrer Handhabung und Bedienung sehr kompliziert und somit benutzerunfreundlich.

Es ist daher die Aufgabe der vorliegenden Erfindung, ein Kochsystem zur Verfügung zu stellen, welches vielseitig einsetzbar ist und insbesondere einem Benutzer einen hohen Komfort in Bezug auf die Handhabung des Kochsystems und die Zubereitung unterschiedlicher Nahrungsmittel und/oder Speisen bietet.

Diese Aufgabe wird gelöst durch ein Kochsystem mit den Merkmalen des Anspruchs 1 und ein Verfahren zum Betreiben eines Kochsystems mit den Merkmalen des Anspruches 25. Bevorzugte Weiterbildungen der Erfindung sind Gegenstand der Unteransprüche. Weitere Vorteile und Merkmale der Erfindung ergeben sich aus den Ausführungsbeispielen.

Das erfindungsgemäße Kochsystem umfasst wenigstens eine Kochfeldeinrichtung, wenigstens eine Steuereinrichtung, wenigstens eine Antriebseinrichtung und wenigstens ein Kochgeschirr. Dabei umfasst die Kochfeldeinrichtung wenigstens eine Aufstelleinrichtung zum Aufstellen von Kochgeschirr und wenigstens eine Heizeinrichtung mit wenigstens einer Heizspule. Dabei umfasst das Kochgeschirr wenigstens eine Gehäuseeinrichtung und wenigstens eine Bearbeitungseinrichtung zum Bearbeiten von wenigstens einem Lebensmittel, wobei die Bearbeitungseinrichtung wenigstens eine Magneteinrichtung aufweist, und wobei die Gehäuseeinrichtung wenigstens einen Boden und wenigstens eine Wandung aufweist, durch welche wenigstens ein Aufnahmevolumen begrenzt wird, wobei in einem zusammengebauten Zustand wenigstens die Bearbeitungseinrichtung in dem Aufnahmevolumen aufgenommen ist.

Die Antriebseinrichtung umfasst wenigstens eine Antriebsspule und die Bearbeitungseinrichtung ist mittels wenigstens eines elektromagnetischen Feldes der Antriebsspule bewegbar.

Bevorzugt ist die Bearbeitungseinrichtung mittels wenigstens eines elektromagnetischen Feldes, insbesondere von der Antriebsspule, direkt und/oder indirekt antreibbar. Insbesondere versetzt wenigstens das eine elektromagnetische Feld der Antriebsspule die Bearbeitungseinrichtung in eine Rotationsbewegung. Vorzugsweise ist die Bearbeitungseinrichtung dazu rotierbar vorgesehen bzw. ausgebildet. Je nach Aufgabe und Ausgestaltung kann das eine elektromagnetische Feld der Antriebsspule die Bearbeitungseinrichtung auch vorzugsweise wenigstens teilweise in eine Translationsbewegung versetzen.

In vorteilhaften Weiterbildungen wird die wenigstens eine Antriebsspule der Antriebseinrichtung von wenigstens einem Strom mit einer ersten Frequenz im Bereich von insbesondere 0,1 Hz bis 1 kHz durchflossen. Insbesondere kann die wenigstens eine Antriebsspule mit wenigstens einer ersten Frequenz betrieben werden.

In zweckmäßigen Weiterbildungen wird die wenigstens eine Heizspule der Heizeinrichtung von wenigstens einem Strom mit einer zweiten Frequenz im Bereich von insbesondere 5 kHz bis 200 kHz durchflossen. Insbesondere kann die wenigstens eine Heizspule mit wenigstens einer zweiten Frequenz betrieben werden.

Vorzugsweise weist die Heizspule im Wesentlichen die gleichen und/oder ähnliche laterale Ausmessungen wie der Boden des Kochgeschirrs auf. Je nach Aufgabe und Ausgestaltung kann die Heizspule aber auch insbesondere kleinere und/oder größere laterale Abmessungen als der Boden des Kochgeschirres aufweisen. Vorzugsweise sind die lateralen Abmessungen der Heizspule so bemessen, dass unterhalb des Bodens des Kochgeschirrs wenigstens eine Antriebsspule anordbar ist.

Besonders bevorzugt umfasst das Kochgeschirr wenigstens ein Bedienelement zum Bedienen der wenigstens einen Antriebseinrichtung. Vorzugsweise ist das wenigstens eine Bedienelement an einer Griffeinrichtung wie z. B. einem Griff und/oder Henkel des Kochgeschirrs aufgenommen. Vorzugsweise umfasst das Bedienelement wenigstens eine Sende-/Empfangseinrichtung zur Kommunikation mit wenigstens der Steuereinrichtung und/oder der Kochfeldeinrichtung und/oder der Antriebseinrichtung.

Vorzugsweise ist der Boden der Gehäuseeinrichtung des Kochgeschirrs wenigstens abschnittsweise aus einem elektrisch leitfähigen, vorzugsweise ferromagnetischen Material ausgebildet bzw. umfasst ein solches Material. Insbesondere wird wenigstens ein Abschnitt des Bodens der Gehäuseeinrichtung von einem nicht ferromagnetischen Material mit geringer elektrischer Leitfähigkeit bereitgestellt. Je nach Aufgabe und Ausgestaltung kann der Boden der Gehäuseeinrichtung insbesondere auch vollständig aus einem nicht ferromagnetischen Material mit geringer elektrischer Leitfähigkeit gebildet sein. Unter einem Material mit einer geringen elektrischen Leitfähigkeit werden Materialien verstanden, deren elektrische Leitfähigkeit kleiner 10 S/m ist.

Bevorzugt ist die Bearbeitungseinrichtung wenigstens teilweise aus dem Aufnahmevolumen entnehmbar. Insbesondere kann die Bearbeitungseinrichtung ein Verbindungselement aufweisen, mittels dessen die Bearbeitungseinrichtung vorzugsweise wenigstens teilweise oder auch vollständig reversibel lösbar bzw. abnehmbar mit dem Kochgeschirr verbindbar ist. Je nach Aufgabe und Ausgestaltung kann die Bearbeitungseinrichtung insbesondere auch vollständig oder teilweise frei, d. h. insbesondere auch ohne eine materielle Verbindung im Aufnahmevolumen entnehmbar aufgenommen sein. Vorzugsweise ist die Bearbeitungseinrichtung wenigstens teilweise permanent, also insbesondere nicht lösbar oder wenigstens nicht ohne weiteres lösbar mit dem Kochgeschirr verbunden und kann insbesondere nur teilweise aus dem Aufnahmevolumen entnommen werden.

Vorzugsweise ist die Steuerungseinrichtung dazu geeignet und ausgebildet, wenigstens die Antriebseinrichtung zu steuern. Insbesondere ist die Steuereinrichtung dazu geeignet und ausgebildet bzw. dazu eingerichtet, ein Verfahren zum Betreiben eines Kochsystems auszuführen.

In zweckmäßigen Weiterbildungen kann die Steuereinrichtung die Antriebseinrichtung und/oder die Heizeinrichtung steuern. Insbesondere steuert die Steuereinrichtung die Kochfeldeinrichtung.

Das erfindungsgemäße Kochgeschirr hat viele Vorteile. Ein erheblicher Vorteil ist, dass die Antriebseinrichtung wenigstens eine Antriebsspule umfasst und dass die Bearbeitungseinrichtung mittels wenigstens eines elektromagnetischen Feldes der Antriebsspule bewegbar ist.

Eine Antriebseinrichtung, welche wenigstens eine Antriebsspule umfasst, ist besonders vorteilhaft, da hierdurch ein elektromagnetisches Feld bereitgestellt werden kann, dass besonders einfach und benutzerfreundlich veränderbar und/oder einstellbar ist. So kann die Antriebsspule mit Strom unterschiedlicher Frequenzen bzw. Frequenzbereichen betrieben werden, um so unterschiedliche elektromagnetisches Felder und/oder sich verändernde elektromagnetische Wechselfeld bereitzustellen. Hierdurch kann eine Bearbeitungseinrichtung zur Bearbeitung von Nahrungsmitteln in Bewegung versetzt werden, welche für die Bearbeitung unterschiedlicher Nahrungsmittel und/oder zur Unterstützung eines Benutzers bei verschiedenen Arbeitsschritten während eines Koch- und/oder Nahrungsmittelzubereitungsvorganges geeignet und/oder insbesondere auch optimal ist. So kann die Antriebseinrichtung zum Beispiel die Bearbeitungseinrichtung so in Bewegung versetzen, dass diese ein in einem Kochgeschirr aufgenommenes Nahrungsmittel durchmischt während dieses erhitzt wird, wodurch ein Anbrennen des Nahrungsmittels vermieden und ein manuelles Umrühren durch einen Benutzer hinfällig wird.

Da die Bearbeitungseinrichtung mittels eines elektromagnetischen Feldes der Antriebsspule bewegbar ist, wird keine materielle Verbindung zwischen Antriebseinrichtung und Bearbeitungseinrichtung benötig, um die Bearbeitungseinrichtung in Bewegung zu versetzen. Dies macht das erfindungsgemäße Kochsystem besonders flexible und vielseitige in der Handhabung und der Zubereitung unterschiedlicher Nahrungsmittel und/oder Speisen, denn ein Austausch der Bearbeitungseinrichtung und/oder von Kochgeschirr ist schnell und einfach möglich.

Bevorzugt ist wenigstens die Antriebsspule der Antriebseinrichtung unterhalb der Aufstelleinrichtung angeordnet. Dies ermöglicht insbesondere eine ebene Ausgestaltung einer von der Aufstelleinrichtung bereitgestellten Aufstellfläche wie z. B. einem Kochfeld, wodurch diese insbesondere einfach zu reinigen ist. Des Weiteren ermöglicht eine solche Ausgestaltung, bei der die Antriebsspule der Antriebseinrichtung unterhalb der Aufstelleinrichtung angeordnet, ist ein besonders ansprechendes Design bzw. besonders ansprechende optische Ausgestaltung der Kochfeldeinrichtung, insbesondere der Aufstelleinrichtung.

Besonders bevorzugt ist die Antriebsspule so angeordnet und/oder ausgerichtet, dass in einem Betriebszustand das elektromagnetische Feld der Antriebsspule die Bearbeitungseinrichtung wenigstens teilweise in eine Rotationsbewegung um wenigstens eine Rotationsachse versetzt.

Dadurch, dass die Antriebsspule so angeordnet und ausgerichtet ist, die Bearbeitungseinrichtung wenigstens teilweise in eine Rotationsbewegung zu versetzen, ist die Bearbeitungseinrichtung besonders vielfältig für die Bearbeitung unterschiedlicher Nahrungsmittel einsetz- und/oder verwendbar. So kann eine in Rotationsbewegung versetzte Bearbeitungseinrichtung z. B. unterschiedliche im Aufnahmevolumen aufgenommene Nahrungsmittel und/oder Speisen besonders vorteilhaft zerkleinern und/oder homogenisieren. Solche bei einer Nahrungszubereitung und/oder einem Kochvorgang typischen Arbeitsschritte müssen somit von einem Benutzer nicht manuell ausgeführt werden, sondern können weitgehend automatisch, insbesondere nach ausgewählten Ausführprogrammen ablaufen. Dies macht die Zubereitung unterschiedlicher Nahrungsmittel und/oder Speisen für einen Benutzer des Kochsystems besonders komfortabel.

In vorteilhaften Weiterbildungen ist die Antriebsspule so angeordnet und/oder ausgerichtet, dass wenigstens ein Kochgeschirr in der Nähe der Antriebsspule platziert bzw. angeordnet werden kann. Vorzugsweise ist die Antriebsspule so unterhalb der Aufstelleinrichtung angeordnet, dass insbesondere ein äußerer Abschnitt des Kochgeschirrs über der Antriebsspule und vorzugsweise ein innerer Abschnitt des Kochgeschirrs über der Heizspule auf der Aufstelleinrichtung platziert werden kann.

Vorzugsweise ist die Antriebsspule so ausgerichtet, dass deren Spulenachse in einer Ebene parallel zur Aufstellfläche der Aufstelleinrichtung liegt. Insbesondere ist die Spulenachse der Antriebsspule senkrecht zu der Spulenachse der Heizspule ausgerichtet.

In zweckmäßigen Weiterbildungen ist die Rotationsachse parallel zu der Orthogonalen der Aufstelleinrichtung und/oder zu der Orthogonalen des Bodens des Kochgeschirrs ausgerichtet.

Bevorzugt umfasst die Antriebseinrichtung mehrere Antriebsspulen, welche so angeordnet und/oder ausgerichtet sind, dass in einem Betriebszustand die Antriebseinrichtung ein um die Rotationsachse rotierendes elektromagnetisches Feld bereitstellt. Durch eine Antriebseinrichtung mit mehreren Antriebsspulen, welche insbesondere so angeordnet sind, dass diese ein um die Rotationsachse rotierendes elektromagnetisches Feld bereitstellen, kann die Bearbeitungseinrichtung besonders zuverlässig in Bewegung, insbesondere in eine Rotationsbewegung versetzt werden.

Vorzugsweise versetzt ein in einem Betriebszustand um die Rotationsachse rotierendes elektromagnetisches Feld wenigstens die Bearbeitungseinrichtung teilweise in eine Rotationsbewegung um die Rotationsachse.

In vorteilhaften Weiterbildungen sind die mehreren Antriebsspulen um die Rotationsachse herum angeordnet und insbesondere deren Spulenachsen senkrecht zur Rotationsachse ausgerichtet. Vorzugsweise liegen die Spulenachsen der mehreren Antriebsspulen in einer Ebene parallel zur Aufstellfläche der Aufstelleinrichtung.

Besonders bevorzugt umfasst die Bearbeitungseinrichtung wenigstens ein Bearbeitungswerkzeug und wenigstens ein bewegbares Element.

Dabei ist das Bearbeitungswerkzeug vorzugsweise als ein Messer, ein Rührer, ein Schlägel, ein Quirl, ein Knethaken und/oder Ähnliches ausgebildet und/oder stellt insbesondere ein solches bereit. Dabei ermöglicht das Bearbeitungswerkzeug eine von einem Benutzer gewünschte und/oder beabsichtigte Bearbeitung eines Lebensmittels bzw. eines Nahrungsmittels.

Vorzugsweise sind das Bearbeitungswerkzeug und das bewegbare Element lösbar miteinander verbunden. Eine solche Ausgestaltung ermöglicht eine besonders einfache Entnahme des Bearbeitungswerkzeuges insbesondere aus dem Aufnahmevolumen und somit eine besonders benutzerfreundliche Reinigung und/oder Wartung des Bearbeitungswerkzeuges. Auch ermöglicht eine solche Ausgestaltung einen besonders benutzerfreundlichen Austausch von Bearbeitungswerkzeugen, sodass verschiedene Bearbeitungswerkzeuge zur Bearbeitung wenigstens eines im Aufnahmevolumen aufgenommenen Nahrungsmittel mit insbesondere dem bewegbaren Element verbundenen werden können. Hierdurch ist das Kochsystem besonders vielseitig einsetz- bzw. anwendbar.

In vorteilhaften Weiterbildungen ist die Magneteinrichtung in und/oder an dem bewegbaren Element aufgenommen. Hierdurch kann insbesondere das bewegbare Element und vorzugsweise auch mit dem bewegbaren Element verbundene andere bzw. weiter Baugruppen besonders einfach und zuverlässig mittels wenigstens dem elektromagnetischen Feld der Antriebsspule in Bewegung, insbesondere in eine Rotationsbewegung versetzt werden.

Vorzugsweise umfasst die Magneteinrichtung wenigstens zwei Permanentmagneten. Je nach Aufgabe und Ausgestaltung kann die Magneteinrichtung insbesondere auch drei, vorzugsweise vier, bevorzugt fünf oder noch mehr Permanentmagneten umfassen.

In zweckmäßigen Weiterbildungen steht wenigstens in einem Betriebszustand die Magneteinrichtung in Wirkverbindung mit dem elektromagnetischen Feld der Antriebsspule.

Bevorzugt sind die wenigsten zwei Permanentmagneten an einander gegenüberliegenden, insbesondere äußeren Abschnitten des bewegbaren Elementes aufgenommen bzw. angeordnet. Je nach Aufgabe und Ausgestaltung können die wenigsten zwei Permanentmagneten auch an anderen vorteilhaften Abschnitten des bewegbaren Elementes aufgenommen und/oder in dieses integriert sein.

Vorzugsweise kann die Magneteinrichtung auch an dem Bearbeitungswerkzeug und/oder anderen Baugruppen der Bearbeitungseinrichtung aufgenommen sein.

Besonders bevorzugt ist das bewegbare Element wenigstens in einem zusammengebauten Zustand um die Rotationsachse rotierbar.

Dabei ist ein zusammengebauter Zustand insbesondere ein Zustand, in dem wenigstens das bewegbare Element, insbesondere die Bearbeitungseinrichtung im Aufnahmevolumen so aufgenommen und/oder angeordnet ist, dass das bewegbare Element wenigstens abschnittsweise um die Rotationsachse rotierbar und/oder bewegbar ist.

Vorzugsweise überträgt das bewegbare Element wenigstens eine Bewegung, insbesondere eine Rotationsbewegung um die Rotationsachse auf das Bearbeitungswerkzeug.

Bevorzugt stellt die Bearbeitungseinrichtung eine Drehachse bereit, an welcher wenigstens das bewegbare Element drehbar gelagert bzw. aufgenommen ist. Vorzugsweise ist eine solche Drehachse, an welcher wenigstens das bewegbare Element drehbar gelagert bzw. aufgenommen ist, mit dem Kochgeschirr abnehmbar und/oder permanent bzw. fest verbunden. Insbesondere stellt die Drehachse die Rotationsachse bereit.

Vorzugsweise ist das bewegbare Element frei bzw. lose im Aufnahmevolumen aufgenommen.

In vorteilhaften Weiterbildungen ist das bewegbare Element ringförmig ausgestaltet. Hierdurch kann das bewegbare Element, insbesondere in einem zylinderförmigen Kochgeschirr bzw. einem Kochgeschirr mit einem im Wesentlichen kreisförmigen Wandungsquerschnitt besonders zuverlässig und benutzerfreundlich angeordnet werden. Auch kann eine ringförmige Ausgestaltung des bewegbaren Elementes insbesondere bei einer Rotationsbewegung unterstützend bzw. stabilisierend wirken.

Vorzugsweise weist ein ringförmig ausgestaltetes bewegbares Element einen Außendurchmesser auf, der insbesondere um 15 mm, vorzugsweise um 10 mm und besonders bevorzugt um 5 mm oder um noch weniger geringer ist als der Innendurchmesser der Gehäuseeinrichtung. Hierdurch wird insbesondere in einem Betriebszustand eine besonders zuverlässige Rotationsbewegung des bewegten Elementes um die Rotationsachse ermöglicht.

In zweckmäßigen Weiterbildungen sind die wenigstens zwei Permanentmagneten entlang des Umfanges des ringförmig ausgestalteten bewegbaren Elementes aufgenommen.

Bevorzugt weist ein ringförmig ausgestaltetes bewegbares Element mehrere Permanentmagneten auf, welche insbesondere in gleichmäßigen Abständen entlang des Umfanges des ringförmig ausgestalteten bewegbaren Elementes angeordnet sind.

Vorzugsweise umschließt das ringförmig ausgestaltete bewegbare Element wenigstens abschnittsweise das Bearbeitungswerkzeug.

In vorteilhaften Weiterbildungen ist das Bearbeitungswerkzeug im Wesentlichen innerhalb des Innendurchmessers des bewegbaren Elementes aufgenommen. Insbesondere ist das Bearbeitungswerkzeug im Wesentlichen in unmittelbarer räumlicher Nähe des Mittelpunktes des ringförmig ausgestalteten bewegbaren Elementes aufgenommen.

Besonders bevorzugt ist die Bearbeitungseinrichtung wenigstens abschnittsweise aus einem ferromagnetischen Material gebildet, sodass die Bearbeitungseinrichtung wenigstens abschnittsweise durch Induktion erhitzbar ist. Hierdurch wird ein besonders homogenes Erhitzen bzw. Erwärmen eines im Aufnahmevolumen aufgenommenen Nahrungsmittel bzw. Lebensmittel ermöglicht.

Vorzugsweise ist das bewegbare Element und/oder das Bearbeitungswerkzeug wenigstens abschnittsweise aus einem elektrisch leitfähigen, bevorzugt ferromagnetischen Material gebildet, sodass dieses wenigstens abschnittsweise durch Induktion erhitzbar ist.

Insbesondere ist die Bearbeitungseinrichtung wenigstens abschnittsweise aus einem elektrisch leitfähigen, bevorzugt ferromagnetischen Material gebildet, sodass die Bearbeitungseinrichtung insbesondere wenigstens mittels eines elektromagnetischen Feldes der Heizspule erhitzbar ist.

Besonders bevorzugt ist die Bearbeitungseinrichtung wenigstens abschnittsweise aus einem ferromagnetischen Material mit einer Curie-Temperatur kleiner 200 °C gebildet.

Vorzugsweise ist die Bearbeitungseinrichtung und/oder das bewegbare Element wenigstens abschnittsweise aus einem ferromagnetischen Material mit einer Curie-Temperatur kleiner als 300 °C, bevorzugt kleiner als 200 °C und besonders bevorzugt kleiner als 150 °C aber insbesondere größer 70 °C gebildet.

In zweckmäßigen Weiterbildungen verringert sich die Leistungsaufnahme bzw. die Erhitzbarkeit der Bearbeitungseinrichtung, insbesondere mittels eines elektromagnetischen Feldes der Heizspule bei Temperaturen oberhalb der Curie-Temperatur, sodass die maximale Temperatur der Bearbeitungseinrichtung begrenzt wird. Insbesondere wird so eine Beschädigung der Bearbeitungseinrichtung und/oder des Kochgeschirrs und/oder eines Lebensmittels im Aufnahmevolumen im Wesentlichen verhindert.

In vorteilhaften Weiterbildungen umfasst das Kochgeschirr wenigstens eine Halteinrichtung, welche die Bearbeitungseinrichtung wenigstens in einem Betriebszustand in einer vorbestimmten Position im Aufnahmevolumen hält.

Vorzugsweise ist die Halteeinrichtung dazu geeignet und ausgebildet, die Bearbeitungseinrichtung wenigstens in einer vorbestimmten Höhe im Aufnahmevolumen zu halten.

Dabei kann die Halteeinrichtung insbesondere von einem wenigsten abschnittsweise an der Wandung der Gehäuseeinrichtung aufgenommenen Umlaufelement bereitgestellt werden. Je nach Aufgabe und Ausgestaltung ist es vorzugsweise auch möglich, dass die Halteeinrichtung von wenigstens einem Permanentmagneten bereitgestellt wird, welcher wenigstens in einem zusammengebauten Zustand in Wirkverbindung mit der Bearbeitungseinrichtung, insbesondere der Magneteinrichtung steht und die Bearbeitungseinrichtung in einer vorbestimmten Höhe im Aufnahmevolumen hält.

Dabei ist die vorbestimmte Höhe insbesondere eine Höhe in der unteren Hälfte, vorzugsweise dem unteren Drittel und besonders bevorzugt im unteren Viertel der Gehäuseeinrichtung. Je nach Aufgabe und Ausgestaltung kann die vorbestimmte Höhe auch vorzugsweise eine Höhe in unmittelbarer Nähe zum Boden der Gehäuseeinrichtung sein. Vorzugsweise ist die vorbestimmte Höhe von einem im Aufnahmevolumen aufgenommenen Nahrungsmittel bedeckt.

Besonders bevorzugt ist die Gehäuseeinrichtung wenigstens abschnittsweise zweischalig ausgebildet, sodass die Gehäuseeinrichtung wenigstens einen Zwischenraum aufweist. Eine solche Ausgestaltung ist besonders vorteilhaft, da ein Zwischenraum eine Aufnahme von vorteilhaften Einrichtungen und Baugruppen wie z. B. Teilen/Abschnitten der Antriebseinrichtung und/oder von wenigstens einem Sensorelement ermöglicht.

Vorzugsweise umfasst eine wenigstens abschnittsweise zweischalig ausgebildete Gehäuseeinrichtung wenigstens eine dem Aufnahmevolumen zugewandte Innenwandung und eine dem Aufnahmevolumen abgewandte Außenwandung, welche wenigstens einen Zwischenraum begrenzen.

In vorteilhaften Weiterbildungen umfasst die wenigstens abschnittsweise zweischalig ausgebildete Gehäuseeinrichtung wenigstens einen dem Aufnahmevolumen zugewandten Innenboden und einen dem Aufnahmevolumen abgewandten Außenboden, welche wenigstens einen Zwischenraum begrenzen.

Vorzugsweise umfasst die wenigstens abschnittsweise zweischalig ausgebildete Gehäuseeinrichtung wenigstens ein dem Aufnahmevolumen zugewandtes Innengehäuse und ein dem Aufnahmevolumen abgewandtes Außengehäuse, welche wenigstens einen Zwischenraum begrenzen.

Bevorzugt ist der Zwischenraum dazu geeignet und ausgebildet, die Antriebseinrichtung wenigstens teilweise aufzunehmen. Insbesondere kann der Zwischenraum wenigstens abschnittsweise mit einem, insbesondere wärmedämmenden Material gefüllt und/oder vorzugsweise wenigstens abschnittsweise evakuiert sein.

Besonders bevorzugt ist die wenigstens eine Antriebsspule orthogonal zur der Aufstelleinrichtung, insbesondere zu einer von der Aufstelleinrichtung bereitgestellten Aufstellfläche ausgerichtet.

Insbesondere ist die Spulenachse der wenigstens einen Antriebsspule orthogonal zur Aufstellfläche ausgerichtet. Vorzugsweise ist die Spulenachse der Antriebsspule parallel zu der Spulenachse der Heizspule ausgerichtet.

In zweckmäßigen Weiterbildungen umfasst die Antriebseinrichtung wenigstens eine Weiterleitungseinrichtung mit wenigstens einem Energieaufnahmeelement und mit wenigstens einem Energieverbrauchselement. Eine solche Ausgestaltung ist besonders vorteilhaft, denn sie ermöglicht nicht nur die Bearbeitungseinrichtung in Bewegung zu versetzen, sondern insbesondere auch Energie an weitere Verbraucher wie z. B. Sensoren und Antriebseinheiten weiterzuleiten. Eine solche Energieübertragung wird auch Energy-Harvesting genannt.

Vorzugsweise sind das Energieaufnahmeelement und das Energieverbrauchselement über wenigstens eine elektrische Leitereinheit zum Leiten eines Stroms wie z. B. einem Kabel verbunden.

Bevorzugt umfasst die Weiterleitungseinrichtung wenigstens eine Signalfiltereinrichtung zur Filterung von elektrischen Signalen, wie insbesondere einen Tiefpassfilter.

In vorteilhaften Weiterbildungen filtert die Signalfiltereinrichtung wenigstens eine Frequenz und/oder wenigstens einen Frequenzbereich aus dem elektrischen Signal, welches von dem Energieaufnahmeelement zu dem Energieverbrauchselement übertragen wird.

Besonders bevorzugt ist die Weiterleitungseinrichtung wenigstens teilweise in dem Zwischenraum der Gehäuseeinrichtung aufgenommen und/oder in diesen integriert. Eine solche Ausgestaltung ist besonders vorteilhaft, da sie ein besonders einfach und zuverlässig Energieaufnahme ermöglicht und ein für einen Benutzer verdeckte Anordnung von Energieverbrauchselement ermöglicht.

Vorzugsweise ist die Weiterleitungseinrichtung vom Kochgeschirr aufgenommen.

In zweckmäßigen Weiterbildungen umfasst das Energieaufnahmeelement wenigstens eine Spule zur Aufnahme von Energie aus wenigstens dem elektromagnetischen Feld der Heizspule und/oder der Antriebsspule. Hierdurch kann das Energieweiterleitungselement besonders effizient und zuverlässig Energie aus wenigstens dem elektromagnetischen Feld der Heizspule und/oder der Antriebsspule aufnehmen.

Vorzugsweise wird die von der wenigstens einen Spule des Energieaufnahmeelementes aufgenommenen Energie insbesondere zur Energieversorgung des wenigstens einen Energieverbrauchselementes genutzt. Bevorzugt versorgt das Energieaufnahmeelement wenigstens das Energieverbrauchselement mit Energie.

Bevorzugt ist das Energieaufnahmeelement in und/oder an einem unteren Abschnitt der Gehäuseeinrichtung aufgenommen. Hierdurch kann die wenigstens eine Spule des Energieaufnahmeelementes besonders effizient Energie aus wenigstens dem elektromagnetischen Feld der Heizspule und/oder der Antriebsspule aufnehmen.

Vorzugsweise ist wenigstens die Spule des Energieaufnahmeelementes in dem Zwischenraum, insbesondere einer zweischalig ausgestalteten Gehäuseeinrichtung aufgenommen.

Besonders bevorzugt ist wenigstens die Spule des Energieaufnahmeelementes in dem Zwischenraum, insbesondere einer zweischalig ausgestalteten Gehäuseeinrichtung zwischen dem Innenboden und dem Außenboden aufgenommen. Vorzugsweise ist wenigstens die Spule des Energieaufnahmeelementes in dem Zwischenraum, insbesondere einer zweischalig ausgestalteten Gehäuseeinrichtung an einem insbesondere äußeren und/oder einem mittigen Abschnitt des Bodens angeordnet bzw. in diesen integriert.

Vorzugsweise ist wenigstens die Spule des Energieaufnahmeelementes in und/oder an einem unteren Abschnitt des Zwischenraumes, insbesondere einer zweischalig ausgestalteten Gehäuseeinrichtung zwischen der Innenwandung und der Außenwandung aufgenommen.

Vorzugsweise ist wenigstens die Spule des Energieaufnahmeelementes in dem Zwischenraum, insbesondere einer zweischalig ausgestalteten Gehäuseeinrichtung vorzugsweise im unteren Viertel der Wandung, bevorzugt im unteren Sechstel der Wandung und ganz besonders bevorzugt in unmittelbarer Nähe zu dem Boden im Bereich der Wandung aufgenommen bzw. in diese integriert.

In zweckmäßigen Weiterbildungen umfasst das Energieverbrauchselement wenigstens eine Spule, wobei in einem Betriebszustand die Bearbeitungseinrichtung wenigstens teilweise mittels wenigstens eines elektromagnetischen Feldes dieser Spule in eine Rotationsbewegung um die Rotationsachse bewegbar ist.

Dabei treibt insbesondere ein elektromagnetisches Feld der Antriebsspule die Bearbeitungseinrichtung indirekt an, indem vorzugsweise ein elektromagnetisches Feld der Antriebsspule Energie zum Antrieb der Bearbeitungseinrichtung bereitstellt. Diese Energie wird insbesondere von dem Energieaufnahmeelement aufgenommen und an die Spule des Energieverbrauchselementes weitergeleitet, sodass insbesondere die Spule des Energieverbrauchselementes ein elektromagnetisches Feld erzeugen kann, mittels welchem die Bearbeitungseinrichtung wenigstens teilweise in eine Rotationsbewegung um die Rotationsachse bewegbar ist.

Hierdurch kann die Bearbeitungseinrichtung, insbesondere zur Bearbeitung wenigstens eines Nahrungsmittels besonders vorteilhaft in eine Rotationsbewegung um die Rotationsachse versetzt werden.

Vorzugsweise wird in einem Betriebszustand die Bearbeitungseinrichtung wenigstens teilweise mittels des elektromagnetischen Feldes der Spule des Energieverbrauchselementes zusätzlich oder insbesondere auch ausschließlich in eine Translationsbewegung versetzt.

Vorzugsweise ist wenigstens die Spule des Energieverbrauchselementes in dem Zwischenraum, insbesondere einer zweischalig ausgestalteten Gehäuseeinrichtung aufgenommen.

Besonders bevorzugt ist wenigstens die Spule des Energieverbrauchselementes in und/oder an einem Abschnitt des Zwischenraumes, insbesondere einer zweischalig ausgestalteten Gehäuseeinrichtung zwischen der Innenwandung und der Außenwandung aufgenommen. Vorzugsweise ist wenigstens die Spule des Energieverbrauchselementes in dem Zwischenraum, insbesondere einer zweischalig ausgestalteten Gehäuseeinrichtung vorzugsweise im mittleren Drittel der Wandung, bevorzugt im unteren Drittel der Wandung und ganz besonders bevorzugt in weitgehend gleicher Höhe wie die Bearbeitungseinrichtung, insbesondere in weitgehend gleicher Höhe wie die Magneteinrichtung aufgenommen bzw. in die Wandung integriert.

In vorteilhaften Weiterbildungen ist die Spule des Energieaufnahmeelementes parallel zu der Antriebsspule und senkrecht zu der Spule des Energieverbrauchselementes ausgerichtet.

Hierdurch wird eine besonders effiziente Energieaufnahme mittels des

Energieaufnahmeelementes und eine besonders effiziente Energieweitergabe mittels der Spule des Energieverbrauchselementes ermöglicht.

In zweckmäßigen Weiterbildungen ist die Spulenachse der Spule des

Energieaufnahmeelementes parallel zu der Spulenachse der Antriebsspule und senkrecht zu der Spulenachse der Spule des Energieverbrauchselementes ausgerichtet.

Bevorzugt umfasst das Energieverbrauchselement wenigstens ein Sensorelement und/oder wenigstens ein Heizelement zum wenigstens abschnittsweisen Erhitzen des Kochgeschirrs. Hierdurch wird ein besonders benutzerfreundlicher bzw. komfortabler Gebrauch des Kochsystems und/oder des Kochgeschirrs ermöglicht.

Vorzugsweise ist das Sensorelement ein Temperatursensor zur Ermittlung wenigstens einer Temperatur des Kochgeschirres und/oder eines im Aufnahmevolumen aufgenommenen Nahrungsmittels. Je nach Aufgabe und Ausgestaltung kann das Sensorelement auch einen Drucksensor, insbesondere zur Ermittlung wenigstens eines Dampfdruckes und/oder einen Drehmomentsensor zur Ermittlung eines Drehmoments, insbesondere der Bearbeitungseinrichtung bereitstellen.

Besonders bevorzugt ist das Sensorelement von der Gehäuseeinrichtung aufgenommen. Vorzugsweise ist das Sensorelement in die Wandung und/oder den Boden, insbesondere in den Zwischenraum einer zweischalig ausgestalteten Gehäuseeinrichtung integriert. Je nach Aufgabe und Ausgestaltung kann das Sensorelement auch in eine Abdeckeinrichtung zum Abdecken und/oder zum Verschließen des Aufnahmevolumens aufgenommen sein. Auch ist es vorzugsweise möglich, dass das Sensorelement in und/oder an der Bearbeitungseinrichtung aufgenommen und/oder in diese integriert ist.

In zweckmäßigen Weiterbildungen ist das Heizelement wenigstens abschnittsweise in den Boden und/oder die Wandung, insbesondere in den Zwischenraum einer zweischalig ausgestalteten Gehäuseeinrichtung integriert.

Vorzugsweise erhitzt das Heizelement wenigstens abschnittsweise den Boden, insbesondere den Innenboden der Gehäuseeinrichtung. Je nach Aufgabe und Ausgestaltung kann das Heizelement auch wenigstens eine Wandung der Gehäuseeinrichtung und/oder das bewegbare Element erhitzen.

Bevorzugt umfasst das Energieverbrauchselement wenigstens ein Kommunikationselement, insbesondere zur drahtlosen Kommunikation mit der Steuereinrichtung und/oder der Kochfeldeinrichtung. Insbesondere ist das Kommunikationselement dazu geeignet und ausgebildet, von der Sensoreinrichtung ermittelte Messwerte an, insbesondere die Steuereinrichtung und/oder die Kochfeldeinrichtung zu senden.

Besonders bevorzugt stellt die Antriebsspule die Heizspule bereit. Hierdurch kann insbesondere die Kochfeldeinrichtung kompakter bzw. platzsparender und kosteneffizienter ausgestaltet werden. Je nach Ausgestaltung stellt die Heizspule vorzugsweise die Antriebsspule bereit.

In vorteilhaften Weiterbildungen wird die Antriebsspule alternierend wenigstens von einem Strom mit einer ersten Frequenz und von einem Strom mit einer zweiten Frequenz durchflossen bzw. ist derart durchströmbar bzw. durchfließbar. Somit wird insbesondere ein elektromagnetisches Feld erzeugt, welches sowohl zum Beheizen des Kochgeschirrs als auch zum Antrieb und/oder zum wenigstens teilweisen in Bewegung versetzen der Bearbeitungseinrichtung geeignet und ausgebildet ist.

Dabei ist die erste Frequenz insbesondere eine Frequenz, welche zum Antrieb wenigstens des bewegbaren Elementes geeignet und ausgebildet ist und insbesondere in einem Frequenzbereich zwischen 0,1 Hz und 1 kHz liegt.

Dabei ist die zweite Frequenz insbesondere eine Frequenz, welche zum induktiven Heizen von Kochgeschirr geeignet und ausgebildet ist und insbesondere in einem Frequenzbereich zwischen 5 kHz und 200 kHz liegt.

Bevorzugt ist das elektromagnetische Feld der Antriebsspule dazu geeignet und ausgebildet, die Bearbeitungseinrichtung anzutreiben und die Bearbeitungseinrichtung und/oder das Kochgeschirr wenigstens abschnittsweise zu erhitzen.

In zweckmäßigen Weiterbildungen umfasst das Kochgeschirr wenigstens eine Abdeckeinrichtung zum Abdecken und/oder Verschließen des Aufnahmevolumens und wenigstens eine Verriegelungseinrichtung zum automatischen Verriegeln der Abdeckeinrichtung.

Dabei wird die Abdeckeinrichtung insbesondere von einem Deckel oder einer ähnlich geeigneten Vorrichtung bereitgestellt.

Vorzugsweise ist die Verriegelungseinrichtung dazu geeignet und ausgebildet die Abdeckeinrichtung in einem Betriebszustand automatisch zu verriegeln.

In vorteilhaften Weiterbildungen umfasst die Verriegelungseinrichtung wenigstens ein elektromagnetisches Element, um die Abdeckeinrichtung insbesondere in einem Betriebszustand automatisch zu verriegeln.

Besonders bevorzugt wird die Verriegelungseinrichtung zum automatischen Verriegeln der Abdeckeinrichtung mittels der von dem Energieaufnahmeelement aufgenommenen Energie betrieben. Je nach Aufgabe und Ausgestaltung ist es vorzugsweise auch möglich, dass die Verriegelungseinrichtung mechanisch ausgeführt ist.

Bei dem erfindungsgemäßen Verfahren zum Betreiben eines Kochsystems, wie es zuvor beschrieben wurde, wird die Bearbeitungseinrichtung mittels wenigstens eines elektromagnetischen Feldes der Antriebsspule angetrieben und/oder bewegt.

Auch das erfindungsgemäße Verfahren zum Betreiben eines Kochsystems bietet die Vorteile des zuvor beschriebenen Kochsystems. Insbesondere ermöglicht es, unterschiedliche Nahrungsmittel und/oder Speisen auf verschiedene bzw. vielseitige Art und Weise zuzubereiten und einen Benutzer besonders komfortabel bei einem Koch- und/oder Nahrungsmittelzubereitungsvorgang zu unterstützen.

Weitere Vorteile und Merkmale der vorliegenden Erfindung ergeben sich aus den Ausführungsbeispielen, welche im Folgenden mit Bezug auf die beiliegenden Figuren erläutert werden.

In den Figuren zeigen:
- Figur 1: eine rein schematische Darstellung eines Ausführungsbeispiels eines erfindungsgemäßen Kochsystems in einer Schnittansicht von der Seite;
- Figur 2: eine rein schematische Darstellung eines weiteren Ausführungsbeispiels eines erfindungsgemäßen Kochsystems in einer Schnittansicht von der Seite
- Figur 3: eine rein schematische Darstellung eines anderen Ausführungsbeispiels eines erfindungsgemäßen Kochsystems in einer Schnittansicht von der Seite
- Figur 4: eine rein schematische Darstellung eines weiteren Ausführungsbeispiels eines erfindungsgemäßen Kochsystems in einer Schnittansicht von der Seite
- Figur 5: eine rein schematische Darstellung eines anderen Ausführungsbeispiels eines erfindungsgemäßen Kochsystems in einer Schnittansicht von der Seite
- Figur 6: eine rein schematische Darstellung eines weiteren Ausführungsbeispiels eines erfindungsgemäßen Kochsystems in einer Schnittansicht von der Seite;
- Figur 7: eine rein schematische Darstellung eines anderen Ausführungsbeispiels eines erfindungsgemäßen Kochsystems in einer Schnittansicht von der Seite;
- Figur 8: eine rein schematische Darstellung eines möglichen Zeit-Spannung Diagramms zum Betreiben eines erfindungsgemäßen Kochsystems
- Figur 9: eine rein schematische Darstellung eines Ausführungsbeispiels einer Kochfeldeinrichtung eines erfindungsgemäßen Kochsystems in einer Schnittansicht von oben; und
- Figur 10: eine rein schematische Darstellung eines anderen Ausführungsbeispiels einer Kochfeldeinrichtung eines erfindungsgemäßen Kochsystems in einer Schnittansicht von oben.

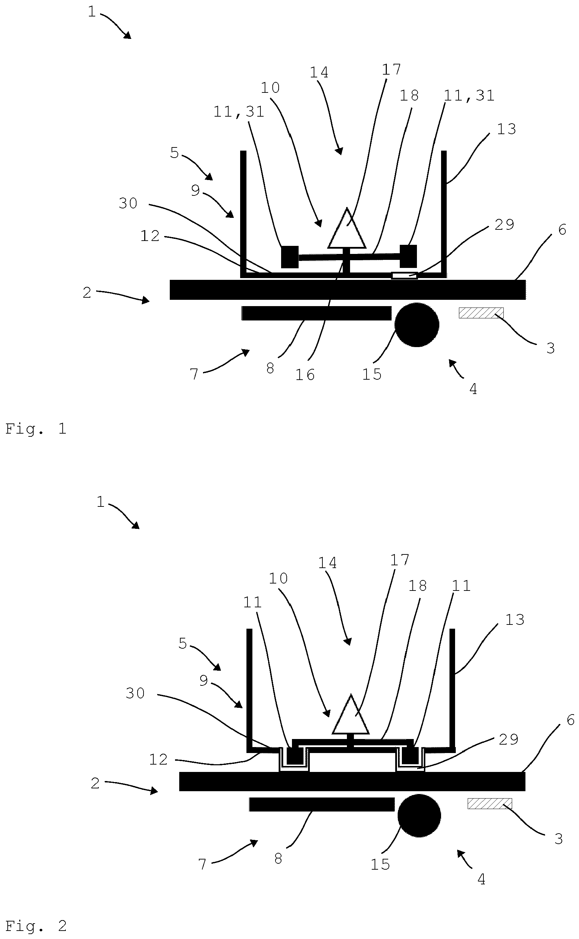

In Figur 1 ist rein schematisch ein Ausführungsbeispiel eines erfindungsgemäßen Kochsystems 1 in einer Schnittansicht von der Seite dargestellt. Hier umfasst das Kochsystem 1 eine Kochfeldeinrichtung 2, eine Steuereinrichtung 3, eine Antriebseinrichtung 4 und ein Kochgeschirr 5.

In dem hier dargestellten Ausführungsbeispiel weist die Kochfeldeinrichtung 2 eine Aufstelleinrichtung 6 zum Aufstellen von Kochgeschirr 5 und eine hier unter der Aufstelleinrichtung 6 angeordnete Heizeinrichtung 7 mit einer Heizspule 8 auf.

Die Kochfeldeinrichtung 2 ist hier als ein Induktionskochfeld ausgeführt, bei welchem hier die Heizspule 8 von einem Strom mit einer Frequenz im Bereich von 5 kHz bis 200 kHz durchflossen wird und so ein elektromagnetisches Wechselfeld zum abschnittsweisen Erhitzen des Kochgeschirrs bereitstellt.

Die Antriebseinrichtung 4 umfasst hier eine Antriebsspule 15, welche hier unterhalb der Aufstellfläche 6 seitlich neben der Heizspule 8 angeordnet ist. Dabei ist hier die Spulenachse der Antriebsspule 15 orthogonal zur Spulenachse der Heizspule 8 und in einer Ebene parallel zur Aufstellfläche der Aufstelleinrichtung 6 ausgerichtet. Je nach Aufgabe und Ausführung kann die Antriebsspule 15 auch an einer anderen Position angeordnet und/oder die Spulenachse der Antriebsspule 15 parallel zur Spulenachse der Heizspule 8 ausgerichtet sein. Auch ist es möglich, dass die Antriebseinrichtung 4 mehrere Antriebsspulen 15 umfasst.

Die Antriebsspule 15 wird hier von einem Strom mit einer Frequenz im Bereich von 0,1 Hz bis 1 kHz durchflossen und stellt so hier ein elektromagnetisches Wechselfeld bereit, welches hier dazu geeignet und ausgebildet ist eine Bearbeitungseinrichtung 10 wenigstens abschnittsweise in Bewegung zu versetzen.

In dem hier dargestellten Ausführungsbeispiel umfasst das Kochgeschirr 5 eine Gehäuseeinrichtung 9 mit einem Boden 12 und mit einer Wandung 13, welche hier ein Aufnahmevolumen 14 begrenzen. Dabei wird hier ein Abschnitt des Bodens 12 von einem elektrisch leitfähigen, vorzugsweise ferromagnetischen Material 30 und ein anderer Abschnitt des Bodens 12 aus einem nicht ferromagnetischen Material 29 mit geringer elektrischer Leitfähigkeit bereitgestellt. Eine solche abschnittsweise Ausführung des Bodens 12 aus einem nicht ferromagnetischen Material 29 mit geringer elektrischer Leitfähigkeit ermöglicht hier ein abschnittsweises Durchdringen des Bodens 12 von einem elektromagnetischen Feld, um die Bearbeitungseinrichtung 10 anzutreiben.

Das Kochgeschirr 5 ist hier auf der Aufstelleinrichtung 6 so aufgestellt, dass der Abschnitt des Bodens 12, welcher hier aus einem nicht ferromagnetischen Material 29 mit geringer elektrischer Leitfähigkeit bereitgestellt wird und welcher hier von einem elektromagnetischen Feld durchdringbar ist, oberhalb der Antriebsspule 15 angeordnet ist. Der Abschnitt des Bodens 12, welcher hiervon einem elektrisch leitfähigen, vorzugsweise ferromagnetischen Material 30 gebildet ist, ist weitgehend oberhalb der Heizspule 8 angeordnet.

In dem hier schematisch dargestellten zusammengebauten Zustand ist in dem Aufnahmevolumen 14 eine Bearbeitungseinrichtung 10 zum Bearbeiten von Lebensmitteln aufgenommen. Die Bearbeitungseinrichtung 10 umfasst hier ein Bearbeitungswerkzeug 17 und ein bewegbares Element 18, welche hier lösbar miteinander verbunden sind.

Das bewegbare Element 18 ist hier um eine Rotationsachse 16 rotierbar an einer Drehachse im Aufnahmevolumen 14 aufgenommen und weist hier an zwei gegenüberliegenden äußeren Abschnitten jeweils einen Permanentmagneten 31 auf. Diese Permanentmagneten 31 stellen hier eine Magneteinrichtung 11 bereit und stehen hier in einem Betriebszustand des Kochsystems 1 durch den nicht ferromagnetischen Abschnitt des Bodens wenigstens zeitweise in Wirkverbindung zu der Antriebsspule 15 der Antriebseinrichtung 4.

Somit kann hier gemäß des erfindungsgemäßen Verfahrens das bewegbare Element 18, und hier somit auch die Bearbeitungseinrichtung 10, mittels des elektromagnetischen Feldes der Antriebsspule 15 in eine Rotationsbewegung um die Rotationsachse 16 bewegt bzw. versetzt werden. Ein solches erfindungsgemäßes Verfahren kann hier insbesondere von der Steuereinrichtung 3 durchgeführt werden, welche hier dazu geeignet und ausgebildet ist, die Antriebseinrichtung 4 und die Heizeinrichtung 7 zu steuern.

In Figur 2 ist rein schematisch ein weiteres Ausführungsbeispiel eines erfindungsgemäßen Kochsystems 1 in einer Schnittansicht von der Seite dargestellt.

Wie in Figur 1 umfasst auch hier das Kochsystem 1 eine Kochfeldeinrichtung 2, eine Steuereinrichtung 3, eine Antriebseinrichtung 4 und ein Kochgeschirr 5. Die Kochfeldeinrichtung 2 umfasst hier eine Heizeinrichtung 7 mit einer Heizspule 8 und die Antriebseinrichtung 4 eine Antriebsspule 15, welche hier unterhalb der Aufstelleinrichtung 6 neben der Heizspule 8 angeordnet und senkrecht zur Achse der Heizspule 8 ausgerichtet ist.

Auch umfasst in dem hier dargestellten Ausführungsbeispiel das Kochgeschirr 5 wie in Figur 1 eine Gehäuseeinrichtung 9 mit einem Boden 12 und mit einer Wandung 11 und eine im Aufnahmevolumen 14 aufgenommene Bearbeitungseinrichtung 10.

Im Unterschied zu dem Ausführungsbeispiel in Figur 1 weist der Boden 12 des Kochgeschirrs 5 hier einen am Boden 12 umlaufenden und nach unten zur Aufstelleinrichtung 6 hervortretenden bzw. hervorstehenden Abschnitt auf. Das Kochgeschirr 5 steht hier mit diesem umlaufenden, hervorstehenden Abschnitt auf der Aufstellfläche 6 auf. Dabei ist der umlaufende, hervorstehende Abschnitt hier aus einem nicht ferromagnetischen Material 29 mit geringer elektrischer Leitfähigkeit gebildet, sodass dieser von einem elektromagnetischen Feld durchdringbar ist.

Die Bearbeitungseinrichtung 10 umfasst hier ein Bearbeitungswerkzeug 17 und ein bewegbares Element 18, welches rotierbar um eine Rotationsachse 16 an einer Drehachse im Aufnahmevolumen 14 aufgenommen ist. Auch hier weist das bewegbare Element 18 an zwei gegenüberliegenden äußeren Abschnitten jeweils einen Permanentmagneten 31 auf, welche hier eine Magneteinrichtung 11 bereitstellen. Im Unterschied zu dem Ausführungsbeispiel in Figur 1 sind hier die Permanentmagneten 31 jedoch in dem umlaufenden, nach unten hervorstehenden, nicht ferromagnetischen Abschnitt des Bodens angeordnet, sodass die Magnetvorrichtung 11 hier in einem Betriebszustand des Kochsystems 1 besonders vorteilhaft wenigstens zeitweise in Wirkverbindung zu der Antriebsspule 15 der Antriebseinrichtung 4 treten kann.

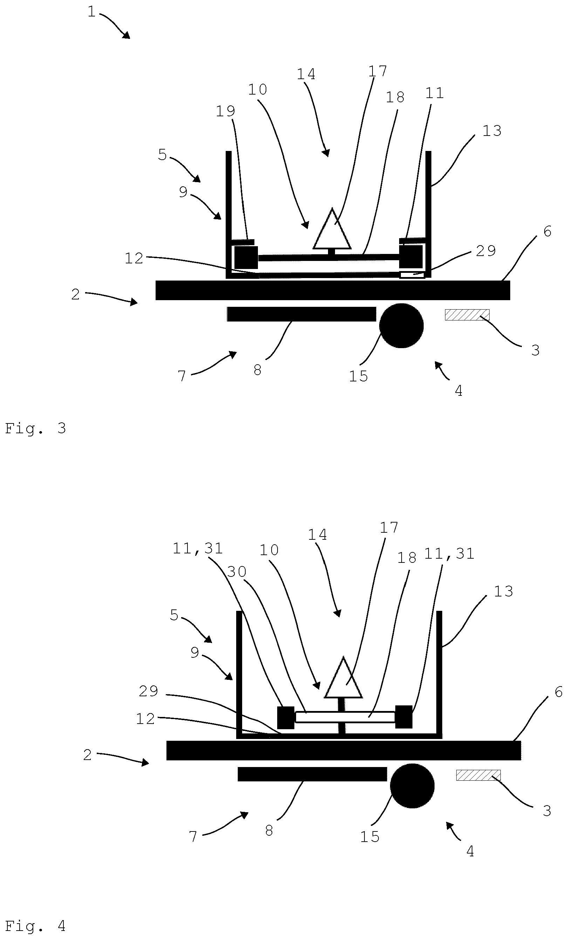

In Figur 3 ist rein schematisch ein anderes Ausführungsbeispiel eines erfindungsgemäßen Kochsystems 1 in einer Schnittansicht von der Seite dargestellt. Die Kochfeldeinrichtung 2, die Steuereinrichtung 3 und die Antriebseinrichtung 4 sind hier wie in dem Ausführungsbeispiel in Figur 1 ausgeführt.

In dem hier dargestellten Ausführungsbeispiel umfasst das Kochgeschirr 5 eine Gehäuseeinrichtung 9 und ein indem Aufnahmevolumen 14 aufgenommene Bearbeitungseinrichtung 10.

Wie in Figur 1 wird auch hier ein Abschnitt des Bodens 12 von einem elektrisch leitfähigen, vorzugsweise ferromagnetischen Material 30 und ein anderer Abschnitt des Bodens 12 von einem nicht ferromagnetischen Material 29 mit geringer elektrischer Leitfähigkeit bereitgestellt, sodass der aus einem nicht ferromagnetischen Material 29 mit geringer elektrischer Leitfähigkeit gebildete Abschnitt von einem elektromagnetischen Feld durchdringbar ist und der aus einem elektrisch leitfähigen, vorzugsweise ferromagnetischen Material 30 gebildete Abschnitt durch Induktion erhitzbar ist.

In dem hier dargestellten Ausführungsbeispiel umfasst die Bearbeitungseinrichtung 10 ein Bearbeitungswerkzeug 17 und ein bewegbares Element 18, welches hier weitgehend frei im Aufnahmevolumen 14 aufgenommen ist und mittels eines elektromagnetischen Feldes der Antriebsspule 15 in eine Rotationsbewegung um eine Rotationsachse 16 versetzbar ist.

In dem hier dargestellten Ausführungsbeispiel ist eine Halteeinrichtung 19 an einer Innenwandung der Gehäuseeinrichtung 9 aufgenommen, welche hier die Bearbeitungseinrichtung 10 an einer vorbestimmten Position im Aufnahmevolumen 14 bzw. hier in einer vorbestimmten Höhe des Kochgeschirrs 5 halt. Die Halteeinrichtung 19 unterstützt hier die Rotationsbewegung der Bearbeitungseinrichtung 10, indem es ein Schlingern oder eine ähnliche Bewegung der Bearbeitungseinrichtung 10 weitgehend verhindert und die Bearbeitungseinrichtung relativ zum Boden 12 im Wesentlichen fixiert. Je nach Aufgabe und Ausführung kann die Halteeinrichtung 19 auch als ein magnetisches Element ausgeführt sein.

In Figur 4 ist rein schematisch ein weiteres Ausführungsbeispiel eines erfindungsgemäßen Kochsystems 1 in einer Schnittansicht von der Seite dargestellt. Die Kochfeldeinrichtung 2, die Steuereinrichtung 3 und die Antriebseinrichtung 4 sind hier wie in dem Ausführungsbeispiel in Figur 1 ausgeführt.

Das Kochgeschirr 5 weist auch hier eine Gehäuseeinrichtung 9 und eine im Aufnahmevolumen 14 aufgenommene Bearbeitungseinrichtung 10 mit einem Bearbeitungswerkzeug 17 und mit einem bewegbaren Element 18 auf.

Im Unterschied zu dem Ausführungsbeispiel in Figur 1 ist hier jedoch der gesamte Boden 12 der Gehäuseeinrichtung 9 aus einem nicht ferromagnetischen Material 29 mit geringer elektrischer Leitfähigkeit gebildet, sodass hier der gesamte Boden 12 des Kochgeschirrs 5 von einem elektromagnetischen Feld durchdringbar ist.

Das bewegbare Element 18 weist hier wie in Figur 1 an den gegenüberliegenden Endabschnitten jeweils einen Permanentmagneten 31 auf. Diese Permanentmagneten 31 stellen auch hier eine Magneteinrichtung 11 bereit und stehen auch hier in einem Betriebszustand des Kochsystems 1 in Wirkverbindung zu der Antriebsspule 15 der Antriebseinrichtung 4. Somit ist hier die Bearbeitungseinrichtung 10 mittels eines elektromagnetischen Wechselfeldes mit einer Frequenz im Bereich von 0,1 Hz bis 1 kHz bewegbar. Ein solches elektromagnetisches Wechselfeld mit einer Frequenz im Bereich von 0,1 Hz bis 1 kHz wird hiervon der Antriebsspule 15 bereitgestellt.

Im Unterschied zu dem Ausführungsbeispiel in Figur 1 ist hier jedoch ein mittiger Abschnitt des bewegbaren Elementes 18 aus einem elektrisch leitfähigen, vorzugsweise ferromagnetischen Material 30 gebildet, sodass hier das bewegbare Element 18 abschnittsweise von einem elektromagnetischen Wechselfeld mit einer Frequenz im Bereich von 5 kHz bis 200 kHz beheizbar ist. Ein solches elektromagnetisches Wechselfeld mit einer Frequenz im Bereich von 5 kHz bis 200 kHz wird hier von der Heizspule 8 bereitgestellt.

Dabei weist hier das ferromagnetische Material 30 des bewegbaren Elementes 18 eine Curie-Temperatur von 190 °C auf. Somit verringert sich die Leistungsaufnahme bzw. die Erhitzbarkeit des bewegbaren Elementes 18 mittels eines elektromagnetischen Feldes, wenn die Temperatur des bewegbaren Elementes sich 190 °C nähert, und verliert die Fähigkeit zur Energieaufnahme im Wesentlichen bei Überschreiten dieser Temperatur.

Die Permanentmagneten 31 der Magneteinrichtung 11 weisen hier eine wesentlich höhere Curie-Temperatur als der mittlere Abschnitt des bewegbaren Elements 18 auf, sodass die Bearbeitungseinrichtung 10 und/oder das bewegbare Element 18 auch bei Überschreiten einer Temperatur von 200 °C von dem elektromagnetischen Feld der Antriebsspule 15 bewegbar ist.

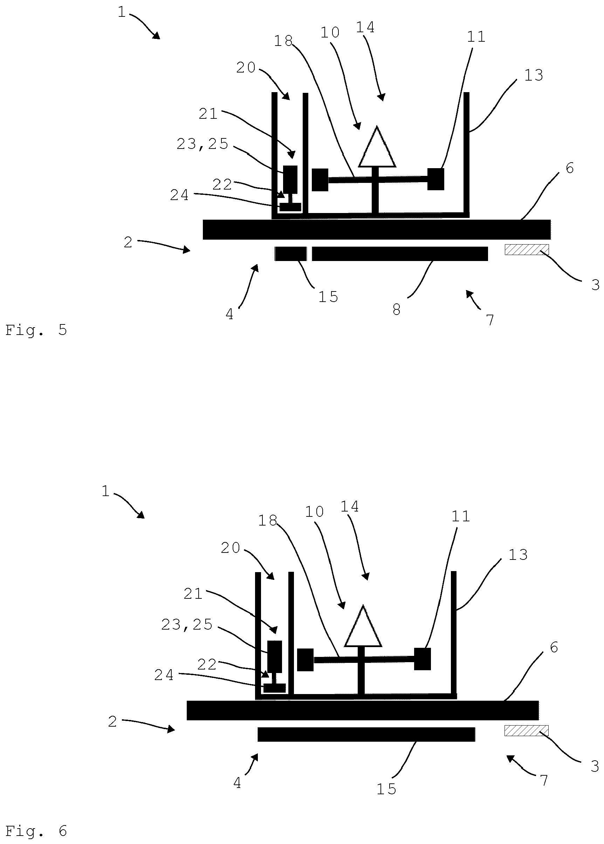

In Figur 5 ist rein schematisch ein weiteres Ausführungsbeispiel eines erfindungsgemäßen Kochsystems 1 in einer Schnittansicht von der Seite dargestellt.

Wie in Figur 1 umfasst auch hier das Kochsystem 1 eine Kochfeldeinrichtung 2, eine Steuereinrichtung 3, eine Antriebseinrichtung 4 und ein Kochgeschirr 5. Die Kochfeldeinrichtung 2 umfasst auch hier eine Heizeinrichtung 7 mit einer Heizspule 8 und die Antriebseinrichtung 4 weist auch hier eine Antriebsspule 15 auf, welche hier unterhalb der Aufstelleinrichtung 6 neben der Heizspule 8 angeordnet ist.

Im Unterschied zu den Ausführungsbeispielen in den Figuren 1 bis 4 ist hier jedoch die Spulenachse der Antriebsspule 15 parallel zur Spulenachse der Heizspule 8 und orthogonal zur Aufstelleinrichtung 6 ausgerichtet. Des Weiteren umfasst in dem hier dargestellten Ausführungsbeispiel die Antriebseinrichtung 4 eine Weiterleitungseinrichtung 21 mit einem Energieaufnahmeelement 22 und einem Energieverbrauchselement 23. Dabei ist hier die Weiterleitungseinrichtung 21 in einem Zwischenraum 20 der Gehäuseeinrichtung 9 zwischen einer Innenwandung und einer Außenwandung aufgenommen.

Das Energieaufnahmeelement 22 umfasst hier eine Spule 24, welche hier in einem unteren Abschnitt des Zwischenraumes 20 unmittelbarer über einem Abschnitt des Bodens 12 des Kochgeschirrs 5 aufgenommen ist, welcher hier aus einem nicht ferromagnetischen Material mit geringer elektrischer Leitfähigkeit 29 gebildet ist. Somit kann hier die Spule 24 Energie aus einem von der Antriebsspule 15 bereitgestellten elektromagnetischen Feld aufnehmen und über eine elektrische Leitereinheit an das Energieverbrauchselement weiterleiten. Diese Art der Energieübertragung wird auch Energy-Harvesting genannt.

Das Energieverbrauchselement 23 umfasst hier eine Spule 25, welche hier auf gleicher Höhe wie die Magneteinrichtung 11 der Bearbeitungseinrichtung 10 im Zwischenraum 20 aufgenommen ist. In einem Betriebszustand kann die Spule 25 hier mittels der von dem Energieaufnahmeelement 22 aufgenommenen Energien ein elektromagnetisches Feld erzeugen bzw. bereitstellen, wodurch hier das bewegbare Element 18 und somit hier auch die Bearbeitungseinrichtung 10 in eine Rotationsbewegung um die Rotationsachse 16 versetzt wird.

Je nach Aufgabe und Ausführung kann das Energieverbrauchselement auch ein Sensorelement, wie z. B. einen Temperatursensor umfassen.

In dem hier dargestellten Ausführungsbeispiel ist der Boden 12 des Kochgeschirrs 5, welcher unter dem Zwischenraum 20 angeordnet ist, aus einem nicht ferromagnetischen Material mit geringer elektrischer Leitfähigkeit 29 gebildet. Der Abschnitt des Bodens 12, welcher hier unterhalb des Aufnahmevolumens 14 angeordnet ist bzw. das Aufnahmevolumen nach untenhin begrenzt, ist hier aus einemelektrisch leitfähigen, bevorzugt ferromagnetischen Material gebildet, sodass dieser Abschnitt des Bodens 12 von einem elektromagnetischen Feld mit einer Frequenz im Bereich von 5 kHz bis 200 kHz erhitzbar ist. Ein solches elektromagnetisches Wechselfeld mit einer Frequenz im Bereich von 5 kHz bis 200 kHz wird hier von der Heizspule 8 bereitgestellt.

In Figur 6 ist rein schematisch ein anderes Ausführungsbeispiel eines erfindungsgemäßen Kochsystems 1 in einer Schnittansicht von der Seite dargestellt.

Das hier dargestellte Kochsystem umfasst alle Ausführungen das Kochsystem in Figur 5, jedoch wird hier die Heizspule 8 von der Antriebsspule 15 bereitgestellt.

In dem hier dargestellten Ausführungsbeispiel wird die Antriebsspule 15 alternierend von einem Strom mit einer ersten Frequenz und mit einem Strom einer zweiten Frequenz durchflossen.

Dabei liegt hier die erste Frequenz im Bereich zwischen 0,1 Hz bis 1 kHz und die zweite Frequenz im Bereich zwischen 5 kHz bis 200 kHz. Somit kann hier die Antriebsspule ein elektromagnetisches Feld bereitstellen, welches hier dazu geeignet und ausgebildet ist, die Bearbeitungseinrichtung anzutreiben bzw. in Bewegung zu versetzen und das Kochgeschirr abschnittsweise durch Induktion zu erhitzen.

Um hier im Wesentlichen die Bewegungseinrichtung 10 nur mit der ersten Frequenz anzutreiben, umfasst hier die Weiterleitungseinrichtung 21 eine Signalfiltereinrichtung, welche hier zwischen Energieaufnahmeelement 22 und Energieverbrauchselement 23 angeordnet ist und hier die zweite Frequenz aus dem an das Energieverbrauchselement 23 weitergeleiteten elektrischen Signal herausfiltert.

In dem hier dargestellten Ausführungsbeispiel ist das Kochgeschirr wie in Figur 6 ausgeführt.

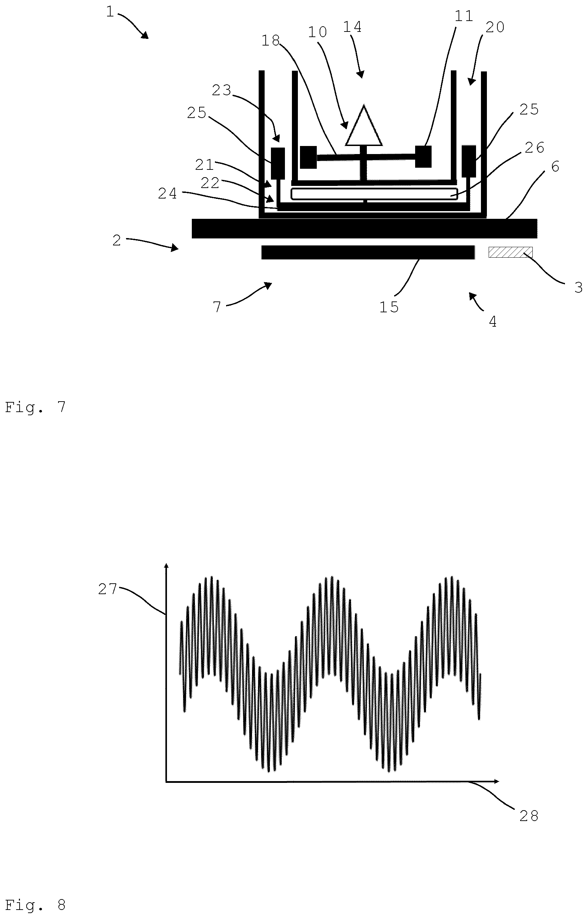

In Figur 7 ist rein schematisch ein weiteres Ausführungsbeispiel eines erfindungsgemäßen Kochsystems 1 in einer Schnittansicht von der Seite dargestellt.

Das hier dargestellte Kochsystem 1 umfasst alle Ausführungen des Kochsystems in Figur 6, jedoch ist hier die Gehäuseeinrichtung 9 zweischalig mit einem Innengehäuse und einem Außengehäuse ausgeführt.

Auch ist hier die gesamte Gehäuseeinrichtung 9, d. h. das Innengehäuse und das Außengehäuse, aus einem nicht ferromagnetischen Material 29 mit einer geringen elektrischen Leitfähigkeit gebildet.

Ein weiterer Unterschied des hier dargestellten Ausführungsbeispiels zu dem in Figur 6 besteht darin, dass hier das Energieverbrauchselement 23 zwei gegenüberliegende Spulen 25 aufweist, welche hier in weitgehend gleicher Höhe wie die Permanentmagneten 31 der Magneteinrichtung 11 im Zwischenraum 20 zwischen Innen- und Außenwandung aufgenommen sind. Somit können hier in einem Betriebszustand die zwei Spulen 25 mittels der von dem Energieaufnahmeelement 22 an sie weitergeleiteten Energie ein elektromagnetisches Feld bereitstellen, welches hier die Bearbeitungseinrichtung abschnittsweise in Bewegung versetzt.

Das Energieverbrauchselement 23 umfasst hier auch ein Heizelement 26. Dabei ist hier das Heizelement 26 im Zwischenraum 20 zwischen Innen- und Außenboden aufgenommen und ermöglicht es hier, mittels der von dem Energieaufnahmeelement 22 an das Energieverbrauchselement 23 weitergeleiteten Energie den Innenboden des Kochgeschirrs 5 wenigstens abschnittsweise zu beheizen.

Wie in Figur 6 wird hier die Antriebsspule 15 alternierend von einem Strom mit einer ersten Frequenz und mit einem Strom einer zweiten Frequenz durchflossen. Dabei liegt auch hier die erste Frequenz im Bereich zwischen 0,1 Hz bis 1 kHz und die zweite Frequenz im Bereich zwischen 5 kHz bis 200 kHz. Somit kann hier die Antriebsspule ein elektromagnetisches Feld bereitstellen, welches hier sowohl dazu geeignet und ausgebildet ist die Antriebseinrichtung in Bewegung zu versetzen als auch das Kochgeschirr abschnittsweise durch Induktion zu beheizen.

In dem hier dargestellten Ausführungsbeispiel umfasst die Weiterleitungseinrichtung zwei Signalfiltereinrichtung, wobei hier jeweils eine Signalfiltereinrichtung zwischen Energieaufnahmeelement 21 und den Spulen 25 und zwischen Energieaufnahmeelement 21 und Heizelement 26 angeordnet ist.

Je nach Aufgabe und Ausgestaltung kann das Kochgeschirr auch eine Abdeckeinrichtung zum Verschließen des Aufnahmevolumens 14 und eine Verriegelungseinrichtung zum automatischen Verriegeln der Abdeckeinrichtung umfassen. Dabei kann die Energie zum Betreiben einer Verrieglungseinrichtung von einem Energieaufnahmeelement 22 bereitgestellt werden.

In Figur 8 ist rein schematisch ein mögliches Zeit-Spannung Diagramm zum Betreiben eines erfindungsgemäßen Kochsystems 1 dargestellt. Hier ist auf der Abszisse die Zeit 28 und auf der Ordinate eine elektrische Spannung 27 aufgetragen. Dabei weist die Spannung 27 hier eine erste Frequenz zum Antrieb der Bearbeitungseinrichtung 10 und eine zweite Frequenz zum Beheizen des Kochgeschirrs 5 auf, wobei hier die erste Frequenz kleiner ist als die zweite Frequenz.

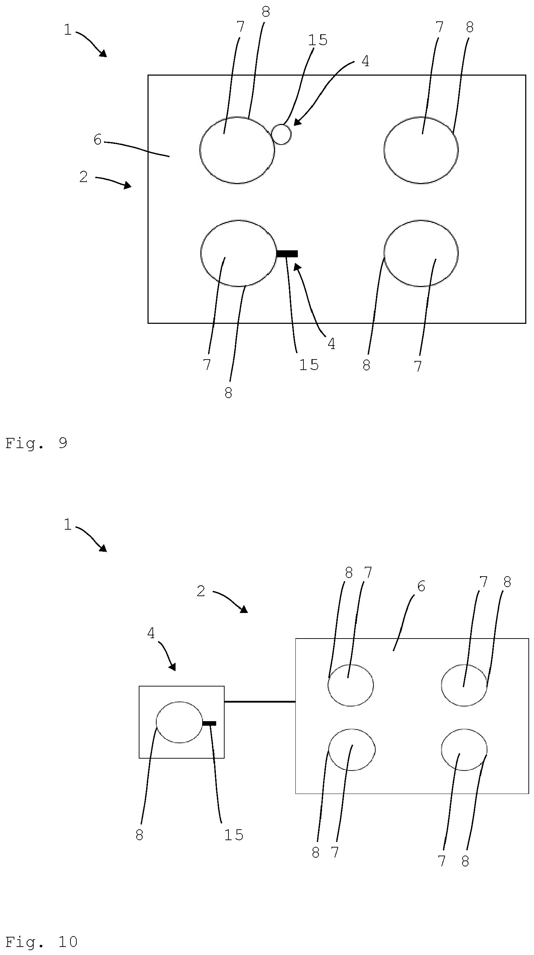

In Figur 9 ist rein schematisch ein Ausführungsbeispiel einer Kochfeldeinrichtung 2 eines erfindungsgemäßen Kochsystems 1 in einer Schnittansicht von oben dargestellt.

In dem hier dargestellten Ausführungsbeispiel umfasst die Kochfeldeinrichtung 2 eine hier nicht näher dargestellte Steuereinrichtung 3, eine Aufstelleinrichtung 6 zum Aufstellen von Kochgeschirr 5 und vier Heizeinrichtungen 7 mit jeweils einer Heizspule 8. Außerdem ist hier neben den Heizspulen 8 der auf der linken Seite der Kochfeldeinrichtung 2 angeordneten Heizeinrichtungen 7 jeweils eine Antriebseinrichtung 4 mit einer Antriebsspule 15 angeordnet.

Die hier links oben angeordnete Antriebseinrichtung 4 weist hier eine Antriebsspule 15 auf, dessen Spulenachse orthogonal zu der Aufstelleinrichtung ausgerichtet ist. Die links unten angeordnete Antriebseinrichtung 4 weist hier eine Antriebsspule 15 auf, dessen Spulenachse orthogonal zur Spulenachse der Heizspule ausgerichtet ist.

Somit ist hier eine Bearbeitungseinrichtung 10 eines auf den linken Abschnitt der Kochfeldeinrichtung 2 oberhalb der Antriebseinrichtung 4 aufgestelltes Kochgeschirr 5 mittels eines von der Antriebsspule 15 bereitgestellten elektromagnetischen Feldes bewegbar. Auch ist ein solches Kochgeschirr hier mittels eines von der Heizspule 8 bereitgestellten elektromagnetischen Feldes erhitzbar.

In dem hier dargestellten Ausführungsbeispiel ist den auf der rechten Seite der Kochfeldeinrichtung 2 angeordneten Heizeinrichtungen 8 keine Antriebseinrichtung 4 zugeordnet und dienen somit hier nur dem Erhitzen von aufgestelltem Kochgeschirr 5.

In Figur 10 ist rein schematisch anderes Ausführungsbeispiel einer Kochfeldeinrichtung 2 eines erfindungsgemäßen Kochsystems 1 in einer Schnittansicht von oben dargestellt.

In dem hier dargestellten Ausführungsbeispiel umfasst die Kochfeldeinrichtung 2 eine hier nicht näher dargestellte Steuereinrichtung 3, eine Aufstelleinrichtung 6 zum Aufstellen von Kochgeschirr 5 und vier Heizeinrichtungen 7 mit jeweils einer Heizspule 8.

Neben der Kochfeldeinrichtung ist hier eine Antriebseinrichtung mit einer Heizspule 8 und mit einer Antriebsspule 15 angeordnet, wobei hier die Spulen Achse der Heizspule 8 und der Antriebsspule 15 senkrecht zueinander ausgerichtet sind.

### Bezugszeichenliste

- 1: Kochsystem
- 2: Kochfeldeinrichtung
- 3: Steuereinrichtung
- 4: Antriebseinrichtung
- 5: Kochgeschirr
- 6: Aufstelleinrichtung
- 7: Heizeinrichtung
- 8: Heizspule
- 9: Gehäuseeinrichtung
- 10: Bearbeitungseinrichtung
- 11: Magneteinrichtung
- 12: Boden
- 13: Wandung
- 14: Aufnahmevolumen
- 15: Antriebsspule
- 16: Rotationsachse
- 17: Bearbeitungswerkzeug
- 18: Bewegbares Element
- 19: Halteeinrichtung
- 20: Zwischenraum
- 21: Weiterleitungseinrichtung
- 22: Energieaufnahmeelement
- 23: Energieverbrauchselement
- 24: Spule
- 25: Spule
- 26: Heizelement
- 27: Spannung
- 28: Zeit
- 29: nicht ferromagnetisches Material
- 30: ferromagnetisches Material
- 31: Permanentmagnet

## Patentansprüche

1. Kochsystem (1) umfassend wenigstens eine Kochfeldeinrichtung (2), wenigstens eine Steuereinrichtung (3), wenigstens eine Antriebseinrichtung (4) und wenigstens ein Kochgeschirr (5), wobei die Kochfeldeinrichtung (2) wenigstens eine Aufstelleinrichtung (6) zum Aufstellen von Kochgeschirr (5) und wenigstens eine Heizeinrichtung (7) mit wenigstens einer Heizspule (8) umfasst, und wobei das Kochgeschirr (5) wenigstens eine Gehäuseeinrichtung (9) und wenigstens eine Bearbeitungseinrichtung (10) zum Bearbeiten von wenigstens einem Lebensmittel umfasst, wobei die Bearbeitungseinrichtung (10) wenigstens eine Magneteinrichtung (11) aufweist, und wobei die Gehäuseeinrichtung (9) wenigstens einen Boden (12) und wenigstens eine Wandung (13) aufweist, durch welche wenigstens ein Aufnahmevolumen (14) begrenzt wird, wobei in einem zusammengebauten Zustand wenigstens die Bearbeitungseinrichtung (10) in dem Aufnahmevolumen (14) aufgenommen ist,
**dadurch gekennzeichnet,**
**dass** die Antriebseinrichtung (4) wenigstens eine Antriebsspule (15) umfasst und dass die Bearbeitungseinrichtung (10) mittels wenigstens eines elektromagnetischen Feldes der Antriebsspule (15) bewegbar ist.

2. Kochsystem (1) nach Anspruch 1, **dadurch gekennzeichnet, dass** wenigstens die Antriebsspule (15) der Antriebseinrichtung (4) unterhalb der Aufstelleinrichtung (6) angeordnet ist.

3. Kochsystem (1) nach einem der beiden vorhergehenden Ansprüche, **dadurch gekennzeichnet, dass** die Antriebsspule (15) so angeordnet ist, dass in einem Betriebszustand das elektromagnetische Feld der Antriebsspule (15) die Bearbeitungseinrichtung (10) wenigstens teilweise in eine Rotationsbewegung um wenigstens eine Rotationsachse (16) versetzt.

4. Kochsystem (1) nach einem der vorhergehenden Ansprüche, **dadurch gekennzeichnet, dass** die Antriebseinrichtung (4) mehrere Antriebsspulen (15) umfasst, welche so angeordnet sind, dass in einem Betriebszustand die Antriebseinrichtung (4) ein um die Rotationsachse (16) rotierendes elektromagnetisches Feld bereitstellt.

5. Kochsystem (1) nach einem der vorhergehenden Ansprüche, **dadurch gekennzeichnet, dass** die Bearbeitungseinrichtung (10) wenigstens ein Bearbeitungswerkzeug (17) und wenigstens ein bewegbares Element (18) umfasst.

6. Kochsystem (1) nach dem vorhergehenden Anspruch, **dadurch gekennzeichnet, dass** die Magneteinrichtung (11) von dem bewegbaren Element (18) aufgenommen ist.

7. Kochsystem (1) nach einem der beiden vorhergehenden Ansprüche, **dadurch gekennzeichnet, dass** das bewegbare Element (18) wenigstens in einem zusammengebauten Zustand um die Rotationsachse (16) rotierbar ist.

8. Kochsystem (1) nach einem der vorhergehenden Ansprüche 6 bis 8, **dadurch gekennzeichnet, dass** das bewegbare Element (18) ringförmig ausgestaltet ist.

9. Kochsystem (1) nach einem der vorhergehenden Ansprüche, **dadurch gekennzeichnet, dass** die Bearbeitungseinrichtung (10) wenigstens abschnittsweise aus einem elektrisch leitfähigen, vorzugsweise ferromagnetischen Material gebildet ist, sodass die Bearbeitungseinrichtung (10) wenigstens abschnittsweise durch Induktion erhitzbar ist.

10. Kochsystem (1) nach dem vorhergehenden Anspruch, **dadurch gekennzeichnet, dass** die Bearbeitungseinrichtung (8) wenigstens abschnittsweise aus einem ferromagnetischen Material mit einer Curie-Temperatur kleiner 200 °C gebildet ist.

11. Kochsystem (1) nach einem der vorhergehenden Ansprüche, **dadurch gekennzeichnet, dass** das Kochgeschirr (5) wenigstens eine Halteinrichtung (19) umfasst, welche die Bearbeitungseinrichtung (10) wenigstens in einem Betriebszustand in einer vorbestimmten Position im Aufnahmevolumen (14) hält.

12. Kochsystem (1) nach einem der vorhergehenden Ansprüche, **dadurch gekennzeichnet, dass** die Gehäuseeinrichtung (9) wenigstens abschnittsweise zweischalig ausgebildet, sodass die Gehäuseeinrichtung (9) wenigstens einen Zwischenraum (20) aufweist.

13. Kochsystem (1) nach einem der vorhergehenden Ansprüche, **dadurch gekennzeichnet, dass** die wenigstens eine Antriebsspule (15) orthogonal zur der Aufstelleinrichtung (6) ausgerichtet ist.

14. Kochsystem (1) nach einem der vorhergehenden Ansprüche, **dadurch gekennzeichnet, dass** die Antriebseinrichtungen (4) wenigstens eine Weiterleitungseinrichtung (21) mit wenigstens einem Energieaufnahmeelement (22) und mit wenigstens einem Energieverbrauchselement (23) umfasst,

15. Kochsystem (1) nach einem der vorhergehenden Ansprüche, **dadurch gekennzeichnet, dass** die Weiterleitungseinrichtung (21) wenigstens teilweise in dem Zwischenraum (20) der Gehäuseeinrichtung (9) aufgenommen ist.

16. Kochsystem (1) nach einem der vorhergehenden Ansprüche, **dadurch gekennzeichnet, dass** das Energieaufnahmeelement (22) wenigstens eine Spule (24) zur Aufnahme von Energie aus wenigstens dem elektromagnetischen Feld der Heizspule (8) und/oder der Antriebsspule (15) umfasst.

17. Kochsystem (1) nach einem der vorhergehenden Ansprüche, **dadurch gekennzeichnet, dass** das Energieaufnahmeelement (22) in und/oder an einem unteren Abschnitt der Gehäuseeinrichtung (9) aufgenommen ist.

18. Kochsystem (1) nach einem der vorhergehenden Ansprüche, **dadurch gekennzeichnet, dass** das Energieverbrauchselement (23) wenigstens eine Spule (25) umfasst, wobei in einem Betriebszustand die Bearbeitungseinrichtung (10) mittels wenigstens eines elektromagnetischen Feldes der Spule (25) in eine Rotationsbewegung um die Rotationsachse (16) bewegbar ist.

19. Kochsystem (1) nach einem der vorhergehenden Ansprüche, **dadurch gekennzeichnet, dass** die Spule (24) des Energieaufnahmeelementes (22) parallel zu der Antriebsspule (15) und die senkrecht zu der Spule (25) des Energieverbrauchselementes ausgerichtet ist.

20. Kochsystem (1) nach einem der vorhergehenden Ansprüche, **dadurch gekennzeichnet, dass** das Energieverbrauchselement (23) ein Sensorelement und/oder ein Heizelement (26) zum wenigstens abschnittsweisen Erhitzen des Kochgeschirrs (5) umfasst.

21. Kochsystem (1) nach einem der vorhergehenden Ansprüche, **dadurch gekennzeichnet, dass** die Antriebsspule (15) die Heizspule (8) bereitstellt.

22. Kochsystem (1) nach dem vorhergehenden Anspruch, **dadurch gekennzeichnet, dass** die Antriebsspule (15) alternierend wenigstens von einem Strom mit einer ersten Frequenz und von einem Strom mit einer zweiten Frequenz durchflossen wird.

23. Kochsystem (1) nach einem der beiden vorhergehenden Ansprüche, **dadurch gekennzeichnet, dass** das elektromagnetische Feld der die Antriebsspule (15) dazu geeignet und ausgebildet ist, die Bearbeitungseinrichtung (10) anzutreiben und die Bearbeitungseinrichtung (10) und/oder das Kochgeschirr (5) wenigstens abschnittsweise zu erhitzen.

24. Kochsystem (1) nach einem der vorhergehenden Ansprüche, **dadurch gekennzeichnet, dass** das Kochgeschirr (5) wenigstens eine Abdeckeinrichtung zum Verschließen des Aufnahmevolumens (14) und wenigstens eine Verriegelungseinrichtung zum automatischen Verriegeln der Abdeckeinrichtung umfasst.

25. Verfahren zum Betreiben eines Kochsystems (1) nach einem der vorhergehenden Ansprüche, **dadurch gekennzeichnet, dass** die Bearbeitungseinrichtung (10) mittels wenigstens eines elektromagnetischen Feldes der Antriebsspule (15) angetrieben bzw. bewegt wird.
